# EUROPÄISCHE PATENTSCHRIFT

(11) **EP 1 263 697 B1**
(45) Veröffentlichungstag und Bekanntmachung des Hinweises auf die Patenterteilung: **10.09.2003**
(21) Anmeldenummer: 01907430.1
(22) Anmeldetag: 10.01.2001
(51) Int. Cl.: C06B 47/14, C08F 8/14, C08F 8/30

(54) **TERPOLYMERE AUS POLYISOBUTYLEN, VINYLESTERN UND MALEINSÄUREANHYDRID SOWIE SPRENGSTOFFE ENTHALTEND SOLCHE POLYMERE ALS EMULGATOREN**
TERPOLYMERS CONSISTING OF POLYISOBUTYLENE, VINYL ESTERS AND MALEIC ACID ANHYDRIDE AND EXPOLSIVES COMPRISING SUCH POLYMERS AS EMULSIFIERS
TERPOLYMERES DE POLYISOBUTYLENE, D'ESTERS VINYLIQUES ET D'ANHYDRIDE D'ACIDE MALEIQUE ET EXPLOSIFS COMPRENANT DE TELS POLYMERES COMME EMULSIFIANTS

(30) Priorität: 27.01.2000 DE 10003297
(43) Veröffentlichungstag der Anmeldung: 11.12.2002
(73) Patentinhaber: Clariant GmbH, 65929 Frankfurt am Main (DE)
(72) Erfinder: KLUG, Peter, 63762 Grossostheim (DE); BENDER, Rolf, 61440 Oberursel (DE)
(74) Vertreter: Mikulecky, Klaus
(86) Internationale Anmeldenummer: EP0100220
(87) Internationale Veröffentlichungsnummer: WO01055059

(56) Entgegenhaltungen:
- EP-A- 0 155 800
- EP-A- 0 330 375
- EP-A- 0 331 306
- EP-A- 0 561 600
- EP-A- 0 693 509
- EP-A- 0 994 087
- BE-A- 729 419
- DE-A- 4 241 948
- US-A- 4 828 633
- US-A- 4 931 110

## Beschreibung

Unter den heute weltweit verwendeten Sprengstoffen sind die Ammoniumnitratsprengstoffe die größte Gruppe. Sie finden speziell im Bergbau weite Verbreitung. Eine besonders wichtige Gruppe unter den Ammoniumnitratsprengstoffen sind hierbei die Emulsionssprengstoffe, die im wesentlichen aus einer Wasser(bzw. Salz)-in-Öl-Emulsion einer bei Raumtemperatur übersättigten wässrigen Lösung in einer Ölmatrix (fuel) bestehen. Die Ölphase ist die durchgehende Phase und umschließt kleine Tröpfchen übersättigter Lösung des Oxidationsmittels. Hierbei kann der Wassergehalt der Lösung bis unter 4 Gew.-% betragen. Die gelösten Salze sind metastabil und haben eine Tendenz zur Kristallisation. Bilden sich beispielsweise Ammoniumnitratkristalle, so hat dies ungünstige Auswirkungen auf die Emulsion (Verfestigung, die Emulsion ist nicht mehr pumpbar) als auch auf die Kapselempfindlichkeit der Emulsion, d.h. der Sprengstoff wird weniger sensibel gegenüber einer Initialzündung. Um eine solche Emulsion stabil zu halten, benötigt man daher im allgemeinen einen Emulgator, der sich zur Herstellung von Wasser-in-Öl-Emulsionen eignet. Er fördert aufgrund seiner Oberflächenaktivität die Emulgierung der Salzphase in kleinen Tröpfchen und behindert nach Bildung der Emulsion die Koaleszenz der gebildeten Tröpfchen.

Die Emulsion, auch Matrix genannt, ist im allgemeinen noch nicht zündbar, und deshalb muss zur Erreichung einer ausreichenden Kapselempfindlichkeit die Dichte der Matrix noch durch Zugabe von Glashohlkugeln (glas-bubbles), durch chemisches Aufgasen (gassing) oder auf anderem Wege, wie beispielsweise durch Zugabe gekörnten Ammoniumnitrats, verringert werden. Dann sind die Emulsionen u.U. auch ohne Booster mit Zündkapseln zündbar. Bei solchen Emulsionen handelt es sich um Sicherheitssprengstoffe. Diese Technik wurde erstmals in US-3 447 978 beschrieben.

US-3 447 978 offenbart Sprengstoffemulsionen, bestehend aus einer Salz-in-Öl-Emulsion einer übersättigten Ammoniumnitratlösung in einer Ölmatrix, wobei ein Emulgator des Wasser-in-Öl-Typs, z.B. ein Sorbitanester, Fettsäureglyceride oder Phosphorsäureester als Emulgatoren in Frage kommen. Diese Emulgatoren liefern aber nur Emulsionen mit geringer Langzeitstabilität.

EP-A-0 155 800 offenbart Emulsions-Explosivstoffgemische, die Emulgatoren enthalten, wobei mindestens ein Emulgator stark lipophil und ein Mittel zur Abänderung der elektrischen Leitfähigkeit der Emulsion ist, das im wesentlichen aus einem lipophilen und aus einem hydrophilen Anteil besteht, und bei dem der lipophile Bestandteil eine Kettenstruktur hat, die von einem Polymer eines 3-6 C-Atome enthaltenen Monoolefins abgeleitet ist. Speziell werden Umsetzungsprodukte von Poly(isobutenyl)bernsteinsäureanhydrid mit Aminoalkoholen, Aminen und Sorbitol als Emulgatoren beschrieben.

EP-A-0 285 608 offenbart Wasser in Öl-Emulsionen, wobei als Emulgatoren Umsetzungsprodukte aus einer kohlenwasserstoffsubstituierten Carbonsäure oder einem kohlenwasserstoffsubstituierten Anhydrid (oder einem davon abgeleiteten Ester oder Amid) mit Ammoniak oder mindestens einem Amin enthalten sind, wobei der Kohlenwasserstoffrest im Mittel 20-500 Kohlenstoffatome besitzt. Es werden keine Polymere mit mehreren KW-Resten offenbart. Im speziellen werden Umsetzungsprodukte von Poly(isobutenyl)bemsteinsäureanhydriden mit Morpholin und Aminoalkoholen beschrieben.

Die in EP-A-0 155 800 und EP-A-0 285 608 genannten Emulgatoren, die auf Polyisobutenylbernsteinsäureanhydrid (d.h. dem Umsetzungsprodukt aus einem langkettigen, verzweigten Olefin mit Maleinsäureanhydrid) basieren, ergeben im Gegensatz zu den in US-3 447 978 genannten Emulgatoren der ersten Generation sehr langzeitstabile Emulsionen. Die zugrundeliegenden Emulgatoren weisen aber den Nachteil auf, dass zu ihrer Synthese aufgrund der zugrundeliegenden En-Reaktion sehr hohe Temperaturen (180 - 230°C) und relativ lange Reaktionszeiten nötig sind, was zu einem hohen Energieverbrauch und dementsprechend hohen Herstellkosten führt.

Auch gehören Polymere aus Polyisobutylen und Maleinsäureanhydrid zum Stand der Technik.

WO-A-90/03359 offenbart Polymere aus Polyisobutylen und Maleinsäureanhydrid, die nach Funktionalisierung mit Polyaminen als Additive in Kraftstoffen und Schmierölen Verwendung finden können. EP-A-0 831 104 offenbart Terpolymere aus Polyisobutylen, α-Olefinen und Maleinsäureanhydrid sowie Umsetzungsprodukte dieser Terpolymere mit Polyaminen für analoge Anwendungen.

Die nicht veröffentlichte deutsche Patentanmeldung 198 47 868 beschreibt modifizierte Copolymere aus Polyisobuten und Maleinsäureanhydrid und ggf. Allylpolyglykolethern als Sprengstoffemulgatoren. Diese Produkte sind sehr wirkungsvolle Emulgatoren für Emulsionssprengstoffe. Diese Produkte haben im Gegensatz zu den in EP-A-0 155 800 und EP-A-0 285 608 genannten Verbindungen mehrere hydrophobe Gruppen und mehrere hydrophile Kopfgruppen am Polymerrückgrat. Die zugrundeliegenden polymeren Anhydride können bei bedeutend niedrigerer Temperatur (80 - 150°C) und durch radikalische Copolymerisation bedeutend schneller als die Alkenylbemsteinsäurederivate des Standes der Technik hergestellt werden, so dass sie sowohl ökologische als auch ökonomische Vorteile gegenüber dem Stand der Technik aufweisen. Die Produkte weisen trotz der im Vergleich zu Polyisobutenylbemsteinsäurederivaten deutlich höheren Molekulargewichte keine erhöhten Viskositäten auf, so dass die Produkte trotz des höheren Molekulargewichtes problemlos zu handhaben sind. Dabei entspricht die Emulgierwirkung und Emulsionsstabilität der Produkte, insbesondere in Mischungen mit geringen Mengen von Co-Emulgatoren, mindestens der im Stand der Technik genannten Produkte. Allerdings neigen diese Substanzen teilweise zur Bildung von Trübungen im Produkt.

Überraschenderweise kann man diese Trübungen jedoch vermeiden, wenn man Copolymere aus Polyisobuten, Maleinsäureanhydrid und Vinylestern von Carbonsäuren mit 2 bis 12 C-Atomen einsetzt. Diese Emulgatoren weisen gleiche oder bessere Emulgierwirkung wie die in der deutsche Patentanmeldung 198 47 868 aufgeführten Verbindungen auf und sind auf gleichem Wege mit niedrigem Energieaufwand herzustellen, bilden aber klare und stabile Produkte. Gegenstand der Erfindung ist daher eine Sprengstoffzusammensetzung, enthaltend
A) einen sauerstoffliefernden Bestandteil, der eine disperse Phase bildet,
B) einen organischen Bestandteil, der eine Dispersionsphase bildet, und
C) mindestens einen Emulgator,
dadurch gekennzeichnet, dass der Emulgator ein Copolymer, enthaltend in statistischer oder geregelter Abfolge Struktureinheiten, die sich von
a) Maleinsäureanhydrid,
b) einem oder mehreren Olefinen mit mehr als 40 Kohlenstoffatomen, und
c) einem Vinylester von Carbonsäuren mit 2 bis 12 C-Atomen ableiten,
wobei die Struktureinheiten, die sich von Maleinsäureanhydrid ableiten, durch Reaktion mit Alkoholen, Aminoalkoholen, Ammoniak oder Aminen modifiziert sind, umfasst.

Im folgenden bezeichnet "Maleinsäureanhydrid" auch das im oben angegebenen Sinne durch Reaktion mit Alkoholen, Aminoalkoholen, Ammoniak oder Aminen modifizierte Maleinsäureanhydrid.

Der erfindungsgemäße Sprengstoffemulgator enthält in der Copolymerkette mindestens ein Olefin, vorzugsweise ein α-Olefin mit mehr als 40, vorzugsweise von 40 bis 500, insbesondere 40 bis 200 Kohlenstoffatomen. Im Copolymer können darüber hinaus noch weitere Comonomere enthalten sein.

Geeignete Olefine für die Herstellung der erfindungsgemäßen Polymere sind Olefine mit bevorzugt α-ständiger Doppelbindung oder Mischungen verschiedener solcher Olefine. Besonders bevorzugt hierfür sind Olefine, die durch Polymerisation von C₂-C₆-Monoolefinen entstehen, wie z.B. Polypropylene oder Polyisobutylene im Molekulargewichtsbereich von vorzugsweise 200-5000 g/mol und enthalten > 30 %, bevorzugt > 50 %, besonders bevorzugt > 70 % Isomere mit *a*-ständiger Doppelbindung, d.h. z.B. mit einer Endgruppe R-C(=CH₂)CH₃. Solche Polyisobutylenqualitäten sind z.B. unter den Handelsnamen Glissopal® oder Ultravis® zu erhalten. Hierbei sind solche Polyisobutylene besonders geeignet, die einen hohen Anteil an Isomeren mit α-ständiger Doppelbindung aufweisen.
Als Vinylester sind Vinylester von Carbonsäuren mit 2 bis 12 C-Atomen, bevorzugt mit 4 bis 12 C-Atomen geeignet, wie z.B. Vinylacetat, Vinylpropionat, besonders bevorzugt Vinylester von Carbonsäuren mit 4 bis 12 C-Atomen, die eine tertiäre Verzweigung der Kohlenstoffkette aufweisen, wie insbesondere Neocarbonsäurevinylester.

Die im Copolymer enthaltenen Vinylester von Neocarbonsäuren leiten sich von Neocarbonsäuren der Formel 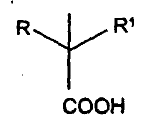 ab, die insgesamt 4 bis 12 Kohlenstoffatome aufweisen. R und R¹ sind lineare Alkylreste. Vorzugsweise handelt es sich bei den Neocarbonsäuren um Neononan-, Neodecan-, Neoundecan- oder Neododecansäure.

Die erfindungsgemäßen Sprengstoffemulgatoren können nach an sich bekannten Methoden synthetisiert werden, eine Beschreibung findet sich z.B. in Oil Gas European Magazine 1996, 22, 38-40. Man polymerisiert vorzugsweise zunächst Mischungen von Verbindungen mit olefinischen Doppelbindungen, bevorzugt *a*-Olefinen, besonders bevorzugt Polyisobutylen und Vinylestern mit Maleinsäureanhydrid unter Verwendung eines geeigneten Radikalstarters. Das molare Mengenverhältnis zwischen Maleinsäureanhydrid und der Summe der anderen Monomeren beträgt vorzugsweise von 0,7:1 bis 1,6:1. Die Polymerisation kann in Substanz, aber auch in einem nichtprotischen Lösungsmittel durchgeführt werden. Die Reaktionstemperatur der Polymerisation liegt zwischen 50 und 200°C, bevorzugt zwischen 80 und 160°C. Es bilden sich bevorzugt alternierende Copolymere aus Olefin und Maleinsäureanhydrid. Im zweiten Reaktionsschritt wird das entstehende Polymer in einer polymeranalogen Reaktion mit Alkoholen oder Aminoalkoholen zu polymeren Halbestern, mit Ammoniak und/oder Aminen und ggf. auch mit Aminoalkoholen zu polymeren Halbamiden oder Imiden umgesetzt.

Geeignete Alkohole für die Funktionalisierung der Maleinsäureanhydrid-Copolymere zu Halbestern sind Monoalkohole mit 1-6 C-Atomen, z.B. Methanol, Ethanol, Propanole, Butanole oder Pentanole; ebenfalls sind Alkylpolyglykole geeignet.

Geeignete Aminoalkohole sind beispielsweise N,N-Dimethylaminoethanol, N,N-Diethylaminoethanol, N,N-Dibutylaminoethanol, 3-Dimethylaminopropanol, N-Hydroxyethylmorpholin, Monoethanolamin, Diethanolamin, Triethanolamin, 3-Aminopropanol, Isopropanolamin und 2-(2-Aminoethoxy)ethanol. Die Halbesterbildung wird bei 30 bis 150°C, bevorzugt bei 50 bis 100°C durchgeführt. Um Vernetzungsreaktionen zu vermeiden, sind Aminoalkohole mit tertiärem Aminstickstoff und einer Hydroxyfunktion wie Dimethylaminoethanol, Diethylaminoethanol oder N-Hydroxyethylmorpholin besonders bevorzugt.

Geeignete Amine für die Funktionalisierung der Maleinsäureanhydrid-Copolymere sind Monoamine mit primärer oder sekundärer Aminofunktion wie Methylamin, Ethylamin, Butylamin, Laurylamin, Cocosfettamin, Stearylamin, Dimethylamin, Diethylamin, Dibutylamin usw., aber auch Di- und Polyamine, z.B.
3-Dimethylaminopropylamin, 3-Diethyiaminopropyiamin oder
3-Morpholinopropylamin.

Bevorzugte Amine enthalten nur eine kondensationsfähige Alkohol- bzw. Aminogruppe, um ein unerwünschtes Vernetzen (crosslinking) der einzelnen Polymereinheiten zu verhindern. Mit den angeführten Aminen erhält man zum Halbamid funktionalisierte Olefin/MSA-Copolymere (MSA = Maleinsäureanhydrid) bei Reaktionstemperaturen von maximal 50-60°C. Oberhalb von 50°C setzt vermehrt Imidbildung ein, so dass man, falls man zum Imid funktionalisierte Olefin/MSA-Copolymere erhalten will, vorzugsweise im Temperaturbereich von ca. 50 bis ca. 150°C arbeitet.

Die Umsetzungen zu den Halbestem, Halbamiden und Imiden können sowohl in Substanz, als auch in einem Lösungsmittel, bevorzugt dann in dem für die Bildung der Sprengstoffemulsion verwendeten Mineralöl durchgeführt werden. Letzteres ist besonders bevorzugt, falls die Viskosität des Emulgators dies erfordert.

Die erfindungsgemäßen Sprengstoffemulgatoren können mit allen gängigen Sprengstoffemulgatoren gemischt werden. Bevorzugte Mischkomponenten sind sowohl die in US-3 447 978 verwendeten Wasser-in Emulgatoren, wie Sorbitanmonooleat, Glyceride, Phosphorsäureester usw., aber auch Amidamine/lmidazoline die durch Kondensation von Fettsäuren mit Polyaminen erhältlich sind. Besonders bevorzugt sind Mischungen der erfindungsgemäßen Sprengstoffemulgatoren mit den monomeren Emulgatoren, wie sie in EP-A-0 155 800 und EP-A-0 285 608 genannt sind, d.h. mit Derivaten von Alkenylbernsteinsäureanhydriden, wie Polyisobutenylbernsteinsäureanhydrid, d.h. Halbestern, Halbamiden, Imiden und Salzen hiervon mit Aminen und Alkalimetallen.

Die erfindungsgemäßen Sprengstoffemulgatoren sind für die Verwendung als Bestandteil C in den erfindungsgemäßen Sprengstoffzusammensetzungen (Emulsionssprengstoffen) geeignet.

Die Salzphase des Emulsionssprengstoffes (Bestandteil A) besteht aus einer übersättigten Lösung eines sauerstoffabspaltenden Salzes, wobei vorzugsweise Ammoniumnitrat verwendet wird. Als Zusätze können andere sauerstoffabgebende Salze, z.B. andere Nitrate wie Natrium- oder Kaliumnitrat sowie Perchlorate Verwendung finden.

Als Ölphase (Bestandteil B) benutzt man im allgemeinen Mineralöle, besonders paraffinische Mineralöle. Es ist auch möglich naphthenbasische Öle, Pflanzenöle, Altöl oder Dieselöl zu benutzen. Die eingesetzten Sprengstoffemulgatoren werden meist in der Ölphase vorgelöst. Die Sprengstoffemulgatoren können als Konzentrat (bis zu 100 % Wirksubstanz) aber auch als Lösung in einem geeigneten Öl eingesetzt werden, falls die Eigenviskosität des Sprengstoffemulgators zu hoch ist.

Weitere Hilfsstoffe sind Konsistenzgeber wie Wachse, Paraffine oder Elastomere, falls patronierter Sprengstoff hergestellt werden soll, Produkte, die die Wasserbeständigkeit der Emulsion erhöhen sollen wie Siliconöle, aber auch weitere Emulsionsstabilisatoren, Verdicker oder Antioxidantien , die die Alterung des Sprengstoffemulgators verhindern sollen.

Die Sprengstoffemulsion setzt sich im allgemeinen aus 20-97 Gew.-%, bevorzugt 30-95 Gew.-%, besonders bevorzugt aus 70-95 Gew.-% der diskontinuierlichen Phase (d.h. vorwiegend Wasser und Ammoniumnitrat mit den sonstigen wasserlöslichen Additiven) zusammen, der Wassergehalt bewegt sich im Bereich von 2-30 %, bevorzugt im Bereich von 4-20 %. Die Ölphase (mit den darin gelösten Additiven) umfasst ca. 1-20 Gew.-% der Gesamtzusammensetzung, bevorzugt aber 1-10 %. Der Emulgatoranteil der Gesamtzusammensetzung liegt im Bereich von 0,2-5 Gew.-%, bevorzugt im Bereich von 0,4-3 %.

Zur Herstellung der Sprengstoffemulsionen benutzt man gängige Emulgierverfahren. Man stellt zunächst eine 80-100°C warme, übersättigte Ammoniumnitratlösung (ggf. unter Zusatz weiterer wasserlöslicher oben . angeführter Hilfsstoffe) her und erwärmt solange, bis alle Feststoffe gelöst sind, ggf. kann man zur Entfernung unlöslicher Stoffe filtrieren. Parallel stellt man eine ebenfalls 50-100°C warme Lösung des Emulgators in der Ölmatrix (ebenfalls unter Zusatz weiterer öllöslicher Hilfsstoffe wie Wachse, Paraffine, Antioxidantien, Konsistenzgeber etc.) her. Sodann gibt man unter Rühren bevorzugt die Salzschmelze in die Öl/Emulgatormischung, aber auch die umgekehrte Fahrweise ist möglich. Kräftiges Nachrühren verstärkt hierbei die Emulsionsbildung. Das Einschleppen von Kristallisationskeimen in die Emulsion muss dabei vermieden werden. Anschließend gibt man ggf. weitere Komponenten, wie Glashohlkugeln (glass bubbles), Feststoffe wie TNT, feste Brennstoffe wie Aluminium oder Schwefel, inerte Materialien wie Baryt oder Natriumchlorid oder ungelöstes Ammoniumnitrat zu und rührt, bis die Feststoffe homogen verteilt sind. Bei chemical gassing (chemisches Aufgasen) gibt man z.B. Thioharnstoff und Natriumnitrit zu, was innerhalb einer gewissen Zeit zum Aufgasen der Emulsion führt. Technisch kann der Emulgierschritt in speziellen Mischern und ggf. unter Verwendung statischer Mischelemente bewerkstelligt werden.

Ein weiterer Gegenstand der Erfindung ist ein Terpolymer, enthaltend Monomereinheiten abgeleitet aus
A) einem Olefin mit mehr als 40 C-Atomen,
B) Maleinsäureanhydrid, und
C) einem Vinylester von Carbonsäuren mit 2 bis 12 C-Atomen.

Das Olefin hat vorzugsweise von 40 bis 500, insbesondere von 40 bis 200 Kohlenstoffatome. Es handelt sich vorzugsweise um ein α-Olefin, besonders bevorzugt um ein Polyisobuten. In einer besonders bevorzugten Ausführungsform handelt es sich um modifizierte Terpolymere, die durch polymeranaloge Umsetzung o.g Terpolymeren mit Alkoholen, Aminen und Aminoalkoholen erhalten werden. Die erfindungsgemäßen Terpolymere werden als Emulgatoren in Sprengstoffzusammensetzungen verwendet.

Besonders bevorzugte Terpolymere enthalten Monomereinheiten aus
A) 18 bis 70 mol-% Polyisobuten
B) 25 bis 80 mol-% Maleinsäureanhydrid
C) 2 bis 20 mol-% Vinylester.

Wie die unten angeführten Versuchsbeispiele belegen, zeigen die erfindungsgemäßen, polymeren Emulgatoren allein oder insbesondere in Mischung mit anderen Emulgatoren wie z.B. gängigen Polyisobutenylbernsteinsäure-halbestern gleiche Emulsionsstabilitäten im Vergleich zu einem konventionellen Polyisobutenylbernsteinsäurederivat.

### Beispiele:

### Synthese des polymeren Emulgators

### Beispiel 1: Copolymer aus Maleinsäureanhydrid, Neodecansäurevinylester (VEOVA 10) und Polyisobutylen

In einem 2 I-Vierhalskolben mit Rührer wurden 800 g (0,80 mol) eines Polyisobutylens mit hohem α-Olefinanteil und einem Molekulargewicht von 1000 g/mol (Glissopal® 1000, BASF), 39,6 g (0,20 mol) VEOVA 10, 147,1 g (1,50 mol) Maleinsäureanhydrid-und 707 g Xylol vorgelegt und auf 80°C erhitzt. Dann wurde 3 x bis 100 mbar evakuiert und zur Inertisierung jeweils mit Stickstoff belüftet. Es wurden bei 80°C 9,9 g (1 Gew.-%) tert.-Butylperbenzoat zugegeben. Die Reaktionsmischung wurde anschließend 30 Stunden bei 80°C gerührt. Dann wurde eine Destillationsbrücke aufgesetzt und zunächst Xylol, dann bei max. 200°C/20 mbar überschüssiges Maleinsäureanhydrid entfernt. Nach Abkühlen wurden 952 g eines rotbraunen, klaren Öls erhalten. Molekulargewicht (GPC): Mn = 1480 g/mol, Mw = 4896 g/mol

### Beispiel 2: Copolymer aus Maleinsäureanhydrid, Neodecansäurevinylester (VEOVA 10) und Polyisobutylen

In einem 2 I-Vierhalskolben mit Rührer wurden 810 g (0,81 mol) eines Polyisobutylens mit hohem α-Olefinanteil und einem Molekulargewicht von 1000 g/mol (Glissopal® 1000, BASF), 17,8 g (0,09 mol) VEOVA 10, 132,3 g (1,35 mol) Maleinsäureanhydrid und 700 g Xylol vorgelegt und auf 80°C erhitzt. Dann wurde 3 x bis 100 mbar evakuiert und zur Inertisierung jeweils mit Stickstoff belüftet. Es wurden bei 80°C 9,6 g (1 Gew.-%) tert.-Butylperbenzoat zugegeben, Die Reaktionsmischung wurde anschließend 30 Stunden bei 80°C gerührt. Dann wurde eine Destillationsbrücke aufgesetzt und zunächst Xylol, dann bei max. 200°C/20 mbar überschüssiges Maleinsäureanhydrid entfernt. Nach Abkühlen wurden 928 g eines rotbraunen, klaren Öls erhalten.
Molekulargewicht (GPC): Mn = 1405 g/mol, Mw = 4282 g/mol
MSA-Äquivalent: 909,6 g/mol

### Beispiel 3: Copolymer aus Maleinsäureanhydrid, Neodecansäurevinylester (VEOVA 10) und Polyisobutylen

In einem 2 I-Vierhalskolben mit Rührer wurden 950 g (0,95 mol) eines Polyisobutylens mit hohem α-Olefinanteil und einem Molekulargewicht von 1000 g/mol (Glissopal® 1000, BASF), 9,9 g (0,05 mol) VEOVA 10, 147,1 g (1,50 mol) Maleinsäureanhydrid und 580 g Xylol vorgelegt und auf 80°C erhitzt. Dann wurde 3 x bis 100 mbar evakuiert und zur Inertisierung jeweils mit Stickstoff belüftet. Es wurden bei 80°C 11,1 g (1 Gew.-%) tert.-Butylperbenzoat zugegeben. Die Reaktionsmischung wurde anschließend 30 Stunden bei 80°C gerührt. Dann wurde eine Destillationsbrücke aufgesetzt und zunächst Xylol, dann bei max. 200°C/20 mbar überschüssiges Maleinsäureanhydrid entfernt. Nach Abkühlen wurden 1077 g eines rotbraunen, klaren Öls erhalten.
Molekulargewicht (GPC): Mn = 1423 g/mol, Mw = 4857 g/mol
MSA-Äquivalent: 823 g/mol

### Beispiel 4: Umsetzung Beispiel 1 mit Diethylaminoethanol

In einem 1 I-Vierhalskolben mit Rührer wurden 101 g eines paraffinischen Mineralöls und 207 g (0,25 mol) des Copolymers aus Beispiel 1 vorgelegt und unter Stickstoffatmosphäre auf 90°C erhitzt. Innerhalb 10 min wurden 29,3 g (0,25 mol) N,N-Diethylethanolamin zugetropft und 5 Stunden bei 100°C gerührt. Es wurden 3,4 g Celite zugesetzt, homogenisiert und über eine Drucknutsche bei 100°C filtriert. Es wurde 271 g eines rotbraunen Öls mit Säurezahl 28,0 mg KOH/g und Basenstickstoff 0,91 % erhalten.

### Beispiel 5: Umsetzung Beispiel 2 mit Diethylaminoethanol

In einem 1 I-Vierhalskolben mit Rührer wurden 110 g eines paraffinischen Mineralöls und 227 g (0,25 mol) des Copolymers aus Beispiel 2 vorgelegt und unter Stickstoffatmosphäre auf 90°C erhitzt. Innerhalb 10 min wurden 29,3 g (0,25 mol) N,N-Diethylethanolamin zugetropft und 5 Stunden bei 100°C gerührt. Es wurden 3,7 g Celite zugesetzt, homogenisiert und über eine Drucknutsche bei 100°C filtriert. Es wurde 299 g eines rotbraunen Öls mit Säurezahl 25,5 mg KOH/g und Basenstickstoff 0,86 % erhalten.

### Beispiel 6: Umsetzung Beispiel 3 mit Diethylaminoethanol

In einem 1 I-Vierhalskolben mit Rührer wurden 101 g eines paraffinischen Mineralöls und 206 g (0,25 mol) des Copolymers aus Beispiel 3 vorgelegt und unter Stickstoffatmosphäre auf 90°C erhitzt. Innerhalb 10 min wurden 29,3 g (0,25 mol) N,N-Diethylethanolamin zugetropft und 5 Stunden bei 100°C gerührt. Es wurden 3,4 g Celite zugesetzt, homogenisiert und über eine Drucknutsche bei 100°C filtriert. Es wurde 320 g eines rotbraunen Öls mit Säurezahl 22,3 mg KOH/g und Basenstickstoff 0,97 % erhalten.

### Beispiel 7: Vergleichsbeispiel

Dieser Emulgator wurde durch Umsetzung eines Polyisobutenylbernsteinsäureanhydrids (Molekulargewicht des zugrundeliegenden Polyisobutens: 950 g/mol) mit einem Moläquivalent 2-Diethylaminoethanol bei 90°C erhalten.

### Beispiel 8:

Der Emulgator nach Beispiel 4 wurde im Massenverhältnis 50 : 50 (unter Berücksichtigung des Wirksubstanzgehaltes) mit dem Vergleichsemulgator nach Beispiel 7 gemischt und bei 60°C homogenisiert.

### Beispiel 9:

Der Emulgator nach Beispiel 5 wurde im Massenverhältnis 50 : 50 (unter Berücksichtigung des Wirksubstanzgehaltes) mit dem Vergleichsemulgator nach Beispiel 7 gemischt und bei 60°C homogenisiert.

### Beispiel 10:

Der Emulgator nach Beispiel 6 wurde im Massenverhältnis 50 : 50 (unter Berücksichtigung des Wirksubstanzgehaltes) mit dem Vergleichsemulgator nach Beispiel 7 gemischt und bei 60°C homogenisiert.

Bestimmung der Molekulargewichte der Basispolymere (Beispiele 1-3):

Die Molekulargewichte wurden durch Gelpermeationschromatographie (GPC) mit Tetrahydrofuran als Eluens gegen Polyisobuten als Standard bestimmt; angegeben wurden die Werte für Mn und Mw. Die Molekulargewichtsbestimmungen schließen das im polymeren Anhydrid enthaltene unumgesetzte Polyisobuten mit ein. Die tatsächlichen Molekulargewichte des polymeren Anhydrids liegen dementsprechend bedeutend höher.

### Herstellung der Testemulsion

Die verwendete Testemulsion besitzt folgende Zusammensetzung:
1,0 g Emulgator (100% Wirksubstanz ohne Berücksichtigung des Ölgehalts)
6,3 g Weißöl
81,0 g Ammoniumnitrat
12,0 g Wasser

Das Weißöl mit Emulgator wird bei 80°C im einem hohen 250 ml Becherglas vorgelegt und unter Rühren mit einem wandgängigen VA-Ankerrührer und unter steigender Rührgeschwindigkeit von 800 bis 2000 U/min die klare, heiße Ammoniumnitrat/Wasser-Schmelze mit einer Temperatur von 95 bis 98°C eingetragen. Die Schmelze wird am Anfang tropfenweise und dann in 15 sek. im Schuss aus einem enghalsigen 100 ml Erlenmeyerkolben so zugegeben, dass sie in der Mitte des Rührblatts verrührt werden kann, die Schmelze darf dabei nicht an der Wandung erstarren. Die entstandene, transparente Emulsion wird 3 bis 5 min bei 80°C nachgerührt und noch heiß (ohne evtl. entstandene Kristalle) abgefüllt.

### Emulsionsstabilität

Die hergestellten Emulsionen wurden a) bei Raumtemperatur (ca. 20-25°C) als auch b) durch Temperaturwechsellagerung (jeweils im Wechsel 24 Stunden bei 0°C und 40°C) auf ihre Lagerstabilität untersucht. Die Beurteilung erfolgte visuell; die Emulsion wurde nicht mehr als stabil angesehen, wenn sich visuell sichtbar Kristallkeime gebildet hatten.

| Emulgator | Lagerstabilität bei RT (d) | Lagerstabilität bei Temperaturwechsellagerung (d) | Polymer- Komponente | Additiv | Mischungsverhältnis |
|---|---|---|---|---|---|
| Beispiel 4 | > 60 | 12 | | | |
| Beispiel 5 | > 60 | > 60 | | | |
| Beispiel 6 | > 60 | 12 | | | |
| Beispiel 7 (Vergl.) | > 30 | > 60 | | | |
| Beispiel 8 | > 60 | > 60 | Beispiel 4 | Beispiel 7 | 50 : 50 |
| Beispiel 9 | > 60 | > 60 | Beispiel 5 | Beispiel 7 | 50 : 50 |
| Beispiel 10 | > 60 | > 60 | Beispiel 6 | Beispiel 7 | 50 : 50 |

## Patentansprüche

1. Sprengstoffzusammensetzung, enthaltend
A) einen sauerstoffliefernden Bestandteil, der eine disperse Phase bildet,
B) einen organischen Bestandteil, der eine Dispersionsphase bildet, und
C) mindestens einen Emulgator,
**dadurch gekennzeichnet, dass** der Emulgator ein Copolymer, enthaltend in statistischer oder geregelter Abfolge Struktureinheiten, die sich von
a) Maleinsäureanhydrid,
b) einem oder mehreren Olefinen mit mehr als 40 Kohlenstoffatomen, und
c) einem Vinylester von Carbonsäuren mit 2 bis 12 C-Atomen ableiten,
wobei die Struktureinheiten, die sich von Maleinsäureanhydrid ableiten durch Reaktion mit Alkoholen, Aminoalkoholen, Ammoniak oder Aminen modifiziert sind, umfasst.

2. Sprengstoffzusammensetzung nach Anspruch 1, **dadurch gekennzeichnet, dass** die Zusammensetzung ein alternierendes Copolymer aus einem Vinylester von Carbonsäuren mit 2 bis 12 C-Atomen, mindestens einem Olefin mit ca. 40 - 500 Kohlenstoffatomen und Maleinsäureanhydrid enthält, das mit a) Alkoholen, b) Aminoalkoholen, c) Ammoniak oder d) Aminen modifiziert ist.

3. Sprengstoffzusammensetzung nach Anspruch 1 und/oder 2, **dadurch gekennzeichnet, dass** das Olefin ein Polymer aus kurzkettigen Olefinen mit 2 - 6 Kohlenstoffatomen ist.

4. Sprengstoffzusammensetzung nach Anspruch 3, **dadurch gekennzeichnet, dass** das kurzkettige Olefin Buten oder ein Butenisomer ist.

5. Sprengstoffzusammensetzung nach einem oder mehreren der Ansprüche 1 bis 4, **dadurch gekennzeichnet, dass** als Olefin Polyisobutylen verwendet wird.

6. Sprengstoffzusammensetzung nach einem oder mehreren der Ansprüche 1 bis 4, **dadurch gekennzeichnet, dass** als Bestandteil c) des Emulgator-Copolymers ein C₈-C₁₂-Vinylester verwendet wird.

7. Sprengstoffzusammensetzung nach einem oder mehreren der Ansprüche 1 bis 6, **dadurch gekennzeichnet, dass** das Polymer aus Maleinsäureanhydrid, Vinylestem und Olefinen mit einem Aminoalkohol zum Halbester oder einem Salz des Halbesters umgesetzt wird.

8. Sprengstoffzusammensetzung nach Anspruch 7, **dadurch gekennzeichnet, dass** der Aminoalkohol 2-Dimethylaminoethanol oder 2-Diethylaminoethanol ist.

9. Sprengstoffzusammensetzung nach einem oder mehreren der Ansprüche 1 bis 8, **dadurch gekennzeichnet, dass** als Co-Emulgator ein Derivat eines Alkenylbernsteinsäureanhydrids verwendet wird.

10. Sprengstoffzusammensetzung nach Anspruch 9, **dadurch gekennzeichnet, dass** es sich bei dem Derivat eines Alkenylbernsteinsäureanhydrids um ein Derivat eines Polyisobutenylbernsteinsäureanhydrids handelt.

11. Terpolymer, enthaltend Monomereinheiten abgeleitet aus
A) einem Olefin mit mehr als 40 C-Atomen,
B) Maleinsäureanhydrid, und
C) einem Vinylester von Carbonsäuren mit 2 bis 12 C-Atomen.

12. Terpolymere, die durch polymeranaloge Umsetzung von Terpolymeren nach Anspruch 11 mit Alkoholen, Aminen, Ammoniak und Aminoalkoholen erhalten werden.

## Claims

1. An explosive composition comprising
**A)** an oxygen-donating constituent, which forms a disperse phase,
**B)** an organic constituent, which forms a dispersion phase, and
**C)** at least one emulsifier,
wherein the emulsifier includes a copolymer comprising, in random or regular order, structural units derived from
a) maleic anhydride,
b) one or more olefins having more than 40 carbon atoms, and
c) a vinyl ester of carboxylic acids having from 2 to 12 carbon atoms,
where the structural units derived from maleic anhydride have been modified by reaction with alcohols, aminoalcohols, ammonia or amines.

2. An explosive composition as claimed in claim 1, wherein the composition comprises an alternating copolymer of a vinyl ester of carboxylic acids having from 2 to 12 carbon atoms, at least one olefin having ca. 40 - 500 carbon atoms and maleic anhydride which has been modified with a) alcohols, b) aminoalcohols, c) ammonia or d) amines.

3. An explosive composition as claimed in claim 1 and/or 2, wherein the olefin is a polymer of short-chain olefins having 2 - 6 carbon atoms.

4. An explosive composition as claimed in claim 3, wherein the short-chain olefin is butene or a butene isomer.

5. An explosive composition as claimed in one or more of claims 1 to 4, wherein the olefin used is polyisobutylene.

6. An explosive composition as claimed in one or more of claims 1 to 4, wherein a C₈-C₁₂-vinyl ester is used as constituent c) of the emulsifier copolymer.

7. An explosive composition as claimed in one or more of claims 1 to 6, wherein the polymer of maleic anhydride, vinyl esters and olefins is reacted with an aminoalcohol to give the half-ester or a salt of the half-ester.

8. An explosive composition as claimed in claim 7, wherein the aminoalcohol is 2-dimethylaminoethanol or 2-diethylaminoethanol.

9. An explosive composition as claimed in one or more of claims 1 to 8, wherein the coemulsifier used is a derivative of an alkenylsuccinic anhydride.

10. An explosive composition as claimed in claim 9, wherein the derivative of an alkenylsuccinic anhydride is a derivative of a polyisobutenylsuccinic anhydride.

11. A terpolymer comprising monomer units derived from
A) an olefin having more than 40 carbon atoms,
B) maleic anhydride, and
C) a vinyl ester of carboxylic acids having from 2 to 12 carbon atoms.

12. A terpolymer obtained by polymer-analogous reaction of terpolymers as claimed in claim 11 with alcohols, amines, ammonia or aminoalcohols.

## Revendications

1. Composition explosive, renfermant
A) un constituant oxygénant qui forme une phase dispersée,
B) un constituant organique, qui forme une phase de dispersion, et
C) au moins un émulsifiant,
**caractérisé en ce que** l'émulsifiant est un copolymère renfermant des unités répétitives dans une succession statistique ou réglée, qui dérivent
a) de l'anhydride maléique,
b) d'une ou plusieurs oléfines présentant plus de 40 atomes de carbone, et
c) d'un ester vinylique d'acides carboxyliques présentant 2 à 12 atomes de carbone,
les unités de structure dérivant de l'anhydride maléique sont modifiées par réaction sur des alcools, aminoalcools, ammoniac ou amines.

2. Composition explosive selon la revendication 1, **caractérisée en ce que** la composition renferme un copolymère alterné d'un ester vinylique d'acides carboxyliques présentant 2 à 12 atomes de carbone, au moins une oléfine présentant environ de 40 à 500 atomes de carbone et l'anhydride maléique qui est modifié par des a) alcools, b) aminoalcools, c) ammoniac ou d) amines.

3. Composition explosive selon la revendication 1 et/ou 2, **caractérisée en ce que** l'oléfine est un polymère d'oléfines à chaîne courte présentant 2 à 6 atomes de carbone.

4. Composition explosive selon la revendication 3, **caractérisée en ce que** l'oléfine à chaîne courte est le butène ou un isomère de butène.

5. Composition explosive selon une ou plusieurs des revendications 1 à 4, **caractérisée en ce qu'**on utilise en tant qu'oléfine un polyisobutylène.

6. Composition explosive selon une ou plusieurs des revendications 1 à 4, **caractérisée en ce qu'**on utilise un ester vinylique en C₈-C₁₂ en tant que constituant c) du copolymère d'émulsifiant.

7. Composition explosive selon une ou plusieurs des revendications 1 à 6, **caractérisée en ce qu'**on fait réagir le polymère d'anhydride maléique, d'esters vinyliques et d'oléfines sur un aminoalcool pour obtenir un hémi-ester ou un sel de l'hémi-ester.

8. Composition explosive selon la revendication 7, **caractérisée en ce que** l'aminoalcool est le 2-diméthylaminoéthanol ou le 2-diéthylaminoéthanol.

9. Composition explosive selon une ou plusieurs des revendications 1 à 8, **caractérisée en ce qu'**on utilise en tant que co-émulsifiant un dérivé d'un anhydride d'acide alcénylsuccinique.

10. Composition explosive selon la revendication 9, **caractérisée en ce qu'**il s'agit pour le dérivé d'un anhydride alcénylsuccinique, d'un dérivé d'un anhydride polyisobuténylsuccinique.

11. Terpolymère renfermant des unités monomères dérivant
A) d'une oléfine présentant plus de 40 atomes de carbone.
B) de l'anhydride maléique, et
C) d'un ester vinylique d'acides carboxyliques ayant 2 à 12 atomes de carbone.

12. Terpolymères que l'on obtient par réaction polyméranalogues selon la revendication 11 sur des alcools, amines, ammoniac et aminoalcools.
